# EUROPEAN PATENT SPECIFICATION

(11) **EP 0 464 637 B1**
(45) Date of publication and mention of the grant of the patent: **15.10.1997**
(21) Application number: 91110569.0
(22) Date of filing: 26.06.1991
(51) Int. Cl.: G06F 13/16

(54) **Expanded memory unit**
Erweiterte Speichereinheit
Unité de mémoire d'expansion

(30) Priority: 27.06.1990 JP 169156/90
(43) Date of publication of application: 08.01.1992
(73) Proprietor: NEC CORPORATION, Tokyo (JP)
(72) Inventor: Aono, Fumio, c/o NEC Corporation, Tokyo (JP); Hara, Ichiro, c/o NEC Engineering, Ltd., Tokyo (JP)
(74) Representative: VOSSIUS & PARTNER

(56) References cited:
- WO-A-90/03004
- DE-A- 3 221 908

## Description

The present invention relates to an information processing system and, more particularly, to an expanded memory unit having an interport communication interface function.

Conventionally, a memory hierarchy of an information processing system generally had a three-level structure constituted by a file device such as a magnetic disk, a main memory using large-capacity semiconductor memory chips, and a cache memory using highest-speed memory chips. However, as the CPU operating speed and the data size were increased, the gaps in both speed and capacity between these hierarchical levels were increased. To bridge these gaps, new hierarchical levels have been introduced between the above hierarchical levels. Examples of the new hierarchical level are a large-capacity secondary cache between the main memory and the cache memory, and a buffer storage such as an electronic disk drive and a disk cache and an expanded memory unit between the file device and the main memory.

Similar to the electronic disk drive, the expanded memory is a semiconductor storage using a large number of semiconductor memory chips with a low price per bit and has a maximum capacity of several times as large as that of the main memory. The most significant difference between the electronic disk drive and the expanded memory is that while the former is connected to an I/O channel and therefore appears to be a high-speed disk drive, the latter is connected directly to a system control unit or the main memory and is therefore accessible at a higher speed without executing any input/output procedure.

Initially, the expanded memory was introduced as a page storage, and data read/write operations were performed between the page storage and a main memory in units of pages having a fixed page size. An arrangement, an operation, and the like of the expanded memory as the page storage are described in U.S. Patent No. 4,476,524. The expanded memory is also to be used as a very high-speed file device for temporarily storing keys or journal records of a data base utilizing a large capacity and high operation speed. In some cases, an expanded memory unit having multiple ports is used as a shared memory unit or a shared file device.

In any of the above applications, the operating speed of the expanded memory is still several times lower than that of a main memory. Therefore, a central processing unit does not often directly access data in the expanded memory unit but generally transfers necessary data to the main memory using a dedicated data transfer mechanism and then refers to the data. Meanwhile, currently unnecessary data in the main memory is transferred to the expanded memory using the above data transfer mechanism in the opposite direction or expelled directly to an external storage such as a magnetic disk drive.

The use of a multiport expanded memory unit realizes a kind of a loosely-coupled multiprocessor system in which a plurality of hosts share the expanded memory unit. This system requires a communication means for communications between the hosts each connected to a port of the expanded memory unit. As the communication means between the hosts, communications via I/O channels were already realized before the advent of the expanded memory. However, to effectively use a high operating speed of the expanded memory, it is desired to support higher speed communications via the expanded memory unit.

In order to impart a host-to-host communications interface function to the expanded memory, an additional internal control logic and an interface for communications are naturally required. A communication request from a communication source host to the expanded memory unit can be easily issued via an existing interface for read/write accesses to the stored data without using any additional interface. That is, by only defining a host-to-host communication operation as one of commands each for designating a request operation type such as a memory data write or read operation, parameters indicating, e.g., a communication destination and communication data can be sent through existing address lines and data lines.

As to a communication path beyond the expanded memory unit, an interface of a certain type must be additionally arranged since the host-to-host communications are sent in an asynchronous manner, independently of operations of the communication destination. More specifically, an interface for accessing a memory system is generally a request-reply interface via which an access request is sent from a request source and a reply as a result of the access is sent back from the memory system. Therefore, to send communications independently of the request-replay interface, an interface for the communications must be additionally provided.

If an interface having a bit width required for host-to-host communications can be arranged between each port of the expanded memory unit and a host, and if a distribution path to every central processing unit can be formed in each communication destination host, the host-to-host communications can be easily realized by using only existing techniques.

However, in an expanded memory unit having a plurality of ports, the use of additional interfaces increases the number of interfaces in proportion to the number of ports. Generally, the number of I/O signal lines is strictly limited in a highly integrated information processing system, and this limitation is more strict in a multiport expanded memory unit. Therefore, it is very difficult to provide a dedicated interface having a sufficient bit width for communications. Similarly, it is difficult to additionally provide a communications interface to a communication receiving/distributing unit in a communication destination.

If communication data is carried via an expanded memory data read path in order to save the number of communications interfaces, an existing request-reply control logic is complicated accordingly. This complexity has an effect not only on an interface part between the expanded memory unit and hosts but also on a central processing unit in a communication destination host which is a final communication destination. That is, since reply data to a certain request issued upon execution of an instruction and communication data from other hosts as interrupt factors are simultaneously present, data handling is complicated to degrade performance of the system.

A method in which communication data is not directly sent but exchanged using a portion of the expanded memory area may be adopted. In this method, however, since write and read operations are to be performed on the expanded memory area before and after host-to-host communications, communication performance is degraded. In addition, since preparation or management of a communication data area must be performed, the system architecture is complicated.

Furthermore, the existence of a communication destination and a communication path must be checked before a host-to-host communication is issued, and the host-to-host communication cannot be used for this purpose. Therefore, it is necessary to communicate through low-speed I/O channels or to create a complicated communications protocol for checking the communication destination and the communication path. DE-A-32 21 908 discloses a communication system with an expanded memory unit comprising a control unit for controlling request processing received from ports of the expanded memory unit. Communication data is exchanged between connected hosts using the memory module of the expanded memory unit.

It is, therefore, an object of the present invention to solve the above conventional problems and provide a simple and rational host-to-host communications means having high performance.

This object is solved with the features of the claims.

The invention is further explained with reference to the drawings:
Fig. 1 is a block diagram showing an arrangement of the first embodiment of the present invention;
Fig. 2 is a block diagram showing an internal arrangement common to system control units 110, 120, 130, and 140 of each host shown in Fig. 1;
Fig. 3A is a view showing the contents of a request/reply interface indicated by any of reference symbols s1 to s4 in Fig. 2 arranged between the system control unit and a request source unit;
Fig. 3B is a view showing the contents of a request/reply interface indicated by reference symbol h in Fig. 2 arranged between the system control unit and an expanded memory unit;
Fig. 3C is a table showing code allocation of request operation designation codes indicated by a request operation designation code signal line 312 in Fig. 3B arranged between the system control unit and the expanded memory unit;
Fig. 4 is a block diagram showing an arrangement of the second embodiment of the present invention;
Fig. 5 is a block diagram showing the third embodiment of the present invention;
Fig. 6A is a view showing a format of connection state information indicated by reference symbol t1 in Fig. 5;
Fig. 6B is a view showing a format of connection state information input to a selector 504 in Fig. 5 and sent to a request source;
Fig. 7 is a block diagram showing an arrangement of the fourth embodiment of the present invention; and
Fig. 8 is a view showing a format of connection state information input to a selector 704 in Fig. 7 and sent to a request source.

The first embodiment of the present invention will be described in detail below with reference to the accompanying drawings.

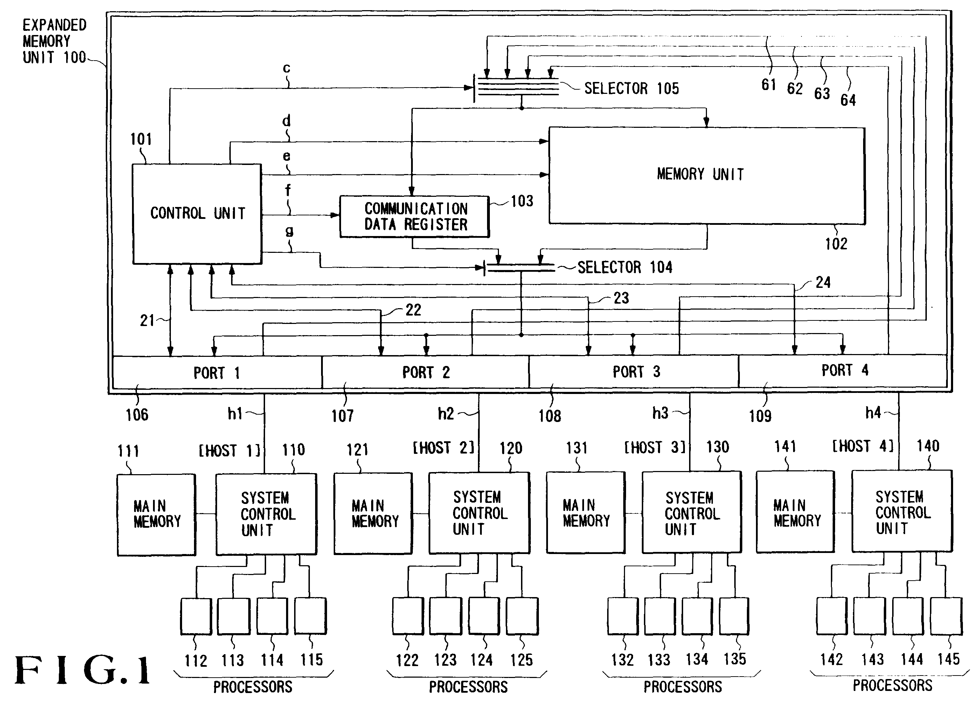

Fig. 1 shows an arrangement of an information processing system in which an expanded memory unit is shared by four hosts. That is, system control units 110 to 140 of four independent hosts are connected to ports 106, 107, 108, and 109 of an expanded memory unit 100. The system control units 110 to 140 are connected to processors (112 to 115, 122 to 125, 132 to 135, and 142 to 145) such as instruction processors and I/O processors and main memories (111, 121, 131, and 141) and exclusively process requests such as memory accesses from requester processors. The system control unit is also called a memory control unit.

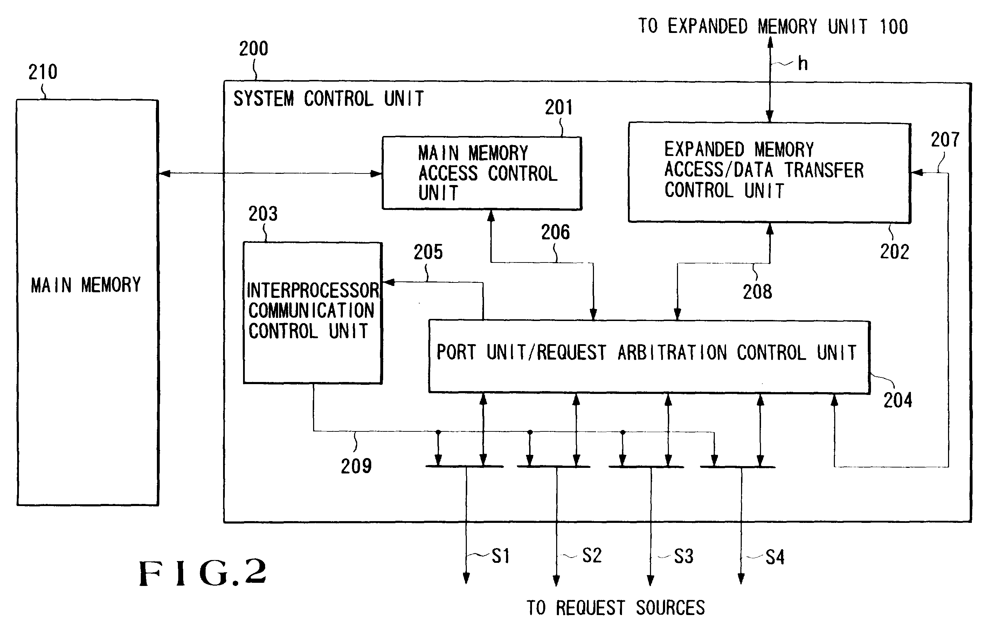

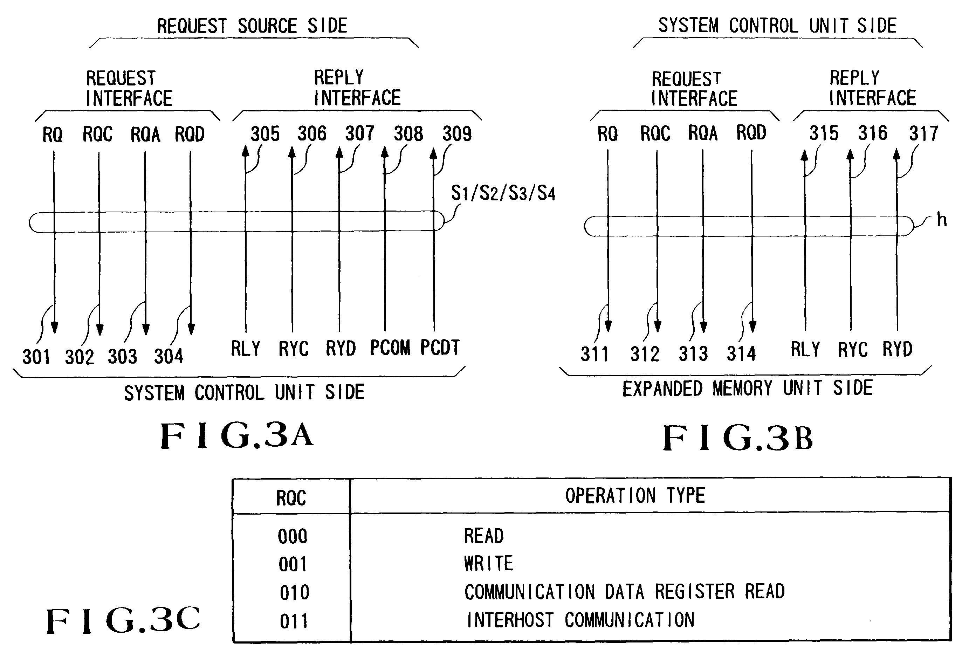

Fig. 2 shows an internal arrangement of each system control unit connected to the expanded memory unit 100 shown in Fig. 1. Fig. 3A shows logical contents of each of interfaces s1 to s4 arranged between a system control unit 200 shown in Fig. 2 and the processor, and Fig. 3B shows logical contents of the system control unit 200 shown in Fig. 2 and an interface h to the expanded memory unit.

Fig. 3C shows a practical format of code allocation of request commands (RQC) shown in Fig. 3B.

Referring to Fig. 2, various requested processing operations sent from the individual request sources are realized as follows. That is, when a main memory read request is sent from a processor 112 of a request source through the interface s1, for example, the request is supplied from a port unit/request arbitration control unit 204 of the system control unit 200 to a main memory access control unit 201 through a path 206, and the main memory access control unit 201 accesses the main memory 210 in accordance with a request address from the request source. After the main memory access control unit 201 receives a reply, it sends the reply back to the request source via the port unit/request arbitration control unit 204. Read data is sent to the request source through a reply data line 307 (RYD) shown in Fig. 3A. If the request from the request source is a write request with respect to the main memory 210, write data sent from the request source through a request data line 304 (RQD) is supplied together with the request address to the main memory 210 through the same path as in the read operation with respect to the main memory 210, thereby performing a write operation. When the write operation is normally finished, the main memory access control unit 201 sends a reply to the processor 112 of the request source via the port unit/request arbitration control unit 204. If the request from the request source is an interprocessor communication request, the request is sent from the port unit/request arbitration control unit 204 to an interprocessor communication control unit 203 through a path 205, and the interprocessor communication control unit 203 simultaneously supplies the interprocessor communication to all the units 112 to 115 via an interface 209 and the interfaces s1 to s4 under the control of the interprocessor communication control unit 203.

If the request is a data transfer request between the expanded memory unit 100 and the main memory 210, an expanded memory access/data transfer control unit 202 is activated through a path 208 and sends a memory access request to the port unit/request arbitration control unit 204 through a path 207. In addition, the expanded memory access/data transfer control unit 202 accesses the expanded memory unit 100 through the interface h, thereby realizing a data transfer operation.

When a host-to-host communication instruction is executed on a processor in any of the systems connected to the expanded memory unit 100, e.g., on the processor 112 shown in Fig. 1, a host-to-host communication request is issued to the system control unit 110. At this time, parameters such as a communication destination are designated by a request address line 303 (RQA), and communication data is designated by the request data line 304 (RQD). This host-to-host communication request is transmitted from the port unit/request arbitration control unit 204 (Fig.2) to the expanded memory access/data transfer control unit 202 via the path 208, and the control unit 202 accesses the expanded memory unit 100 through an interface h1 shown in Fig. 1. The request to the expanded memory unit 100 is sent through a request interface shown in Fig. 3B. In this case, "011" indicating host-to-host communication as shown in Fig. 3C is used as a command 312 (RQC).

Referring to Fig. 1, if the expanded memory unit 100 receives a host-to-host communication request from the system control unit 110, a control unit 101 operates a selector 105 to select a request data signal b1 from a port 1 (106). At the same time, the control unit 101 activates a set signal f of a communication data register 103 to set the communication data from the request source to the communication data register 103. In addition, the control unit 101 sends a control signal to a port 2 (107) corresponding to the communication destination (in this embodiment, the host 2) through a control interface a2 and outputs the host-to-host communication request and a communication source port number (= 1) from a port 2 (107) to the system control unit 120 of the system 2 via an interface h2. As a transmission path for this host-to-host communication request and the like, an existing interface may be partially or entirely used, or a dedicated path may be provided. In this embodiment, the reply interface shown in Fig. 3B is used. That is, the host-to-host communication is reported by a reply signal 315 RLY, and the communication source port number (= 1) is reported by a reply code signal 316 RYC. Note that the above RLY can have a state sufficient to distinguish a reply to the request from the host-to-host communication request or that discrimination between the reply and the communication is performed by appended information such as the RYC. If the system 2 designated to be the communication destination is accessing the expanded memory unit 100 and if issue of a reply to the access contends with issue of the communication, control is executed such that one of the reply and the communication waits in the port 2 (107) until the other is issued.

An operation performed after the system control unit 120 of the system 2 receives the host-to-host communication request through the interface h2 will be described below with reference to Fig. 2. Referring to Fig. 2, the host-to-host communication request from the expanded memory interface h is received by the expanded memory access/data transfer control unit 202. The expanded memory access/data transfer control unit 202 plays a role as a request source to issue an interprocessor communication request to the port unit/request arbitration control unit 204 via the path 207. The port unit/request arbitration control unit 204 receives the interprocessor communication request and sends the interprocessor communications simultaneously to all the connected processors through the interfaces s1 to s4. As communication data for the interprocessor communication, minimum required information such as the type of communication, a port number at the expanded memory unit 100 to which the system control unit 110 of the communication source host is connected, and an expanded memory unit number used as a communication path if a plurality of expanded memory units are present are transmitted. In this case, the interprocessor communications are communicating means conventionally used in communications between internal processors of hosts, in which a host-to-host communication sent from another host via an expanded memory unit can be notified to any processor in a receiving host through this interprocessor communications path. If a communication destination host has a plurality of processors, a processor to serve as a communication destination of the interprocessor communication and therefore of the host-to-host communication is determined in accordance with rules in the system. In this embodiment, communication data is simultaneously supplied to all the processors having a receiving function, and a processor which initiates a receiving operation earliest excludes the other processors and receives the communication data.

When the host-to-host communication is received by one of the processors 122 to 125 in the communication destination host as described above, the one of the processors 122 to 125 which has received the communication data accesses the expanded memory unit 100 which was used as a communication path via the system control unit 120 to extract the communication data and performs processing in accordance with the contents of the data.

In this manner, the host-to-host communication can be realized by hardware.

A method of managing the communication data register arranged on the expanded memory unit 100 will be described below. When only one communication data register 103 is present on the expanded memory unit 100, exclusive control of the communication data register must be performed between hosts which share the expanded memory unit 100. Generally, various types of methods of performing exclusive control for a shared source have been conventionally proposed, and an optimal one of the methods may be selected in accordance with the type of system. If a plurality of communication data registers 103 are present on the expanded memory unit 100, an algorithm for selecting one of the data registers to be used upon each communication must be determined. More specifically, a data register may be designated by a request source, or the expanded memory unit may assign an empty register in accordance with a predetermined method. In any method, if an algorithm is not determined such that the communication data register number is uniquely determined in a communication destination, a communication register number must be reported to the communication destination during communication. The communication destination designates the communication data register number on the expanded memory unit uniquely determined in the communication destination on the basis of a predetermined algorithm or designated upon reception of the communication request to read out the communication data, thereby correctly receiving the communication data from the communication source.

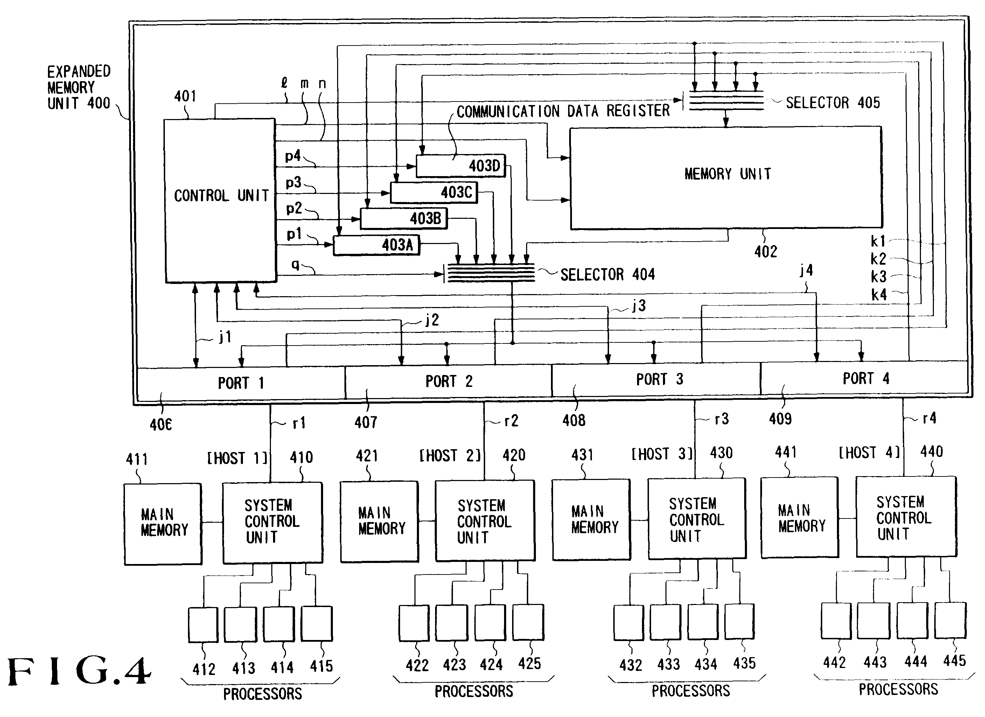

The second embodiment of the present invention will be described below with reference to Fig. 4.

The structure and operation of an expanded memory unit 400 shown in Fig. 4 are exactly the same as those of the expanded memory unit 100 shown in Fig. 1 described in the first embodiment except for a connection relationship between communication data registers used in host-to-host communications and a control logic for the registers. Therefore, in the second embodiment, only an operation of host-to-host communication will be described.

The expanded memory unit shown in Fig. 4 includes four communication data registers 403A to 403D, and the input terminals of the registers 403A to 403D are connected to ports 1 (406) to 4 (409), respectively. That is, communication data from the port 1 (406) is exclusively set in the communication data register 403A, and data from the port 2 (407) is exclusively set in the register 403B. In this manner, exclusive communication data registers are present in one-to-one correspondence with the four ports of the expanded memory unit.

Referring to Fig. 4, when the expanded memory unit 400 receives a host-to-host communication request from a system control unit 410 of a host connected to the expanded memory 400 unit, a control unit 401 activates a set signal p1 to fetch communication data k1 from a request source into the register 403A. In addition, the control unit sends a control signal to the port 2 (407) corresponding to a communication destination (in this embodiment, a host 2) through a control interface j2 and outputs a host-to-host communication request and a communication source port number (= 1) from the port 2 (407) to a system control unit 420 of the host 2.

Since the following communication operation is performed in the same manner as in the first embodiment, only the difference between the first and the second embodiments will be described. That is, the host-to-host communication of this embodiment is different from that of the first embodiment in that the communication data registers are arranged in one-to-one correspondence with the communication source ports to allow no degree of freedom in register selection in this embodiment. In addition, as a register number to be used in a read request with respect to the communication data registers, register nos. 1 to 4 are assigned in correspondence with the port numbers such that register no. 1 is assigned to the communication data register 403A corresponding to the port 1 (406).

Therefore, a communication destination host which receives a communication request designates a received communication source port number (= 1) directly as a register number to issue the communication data register read request, thereby correctly receiving communication data from the communication source.

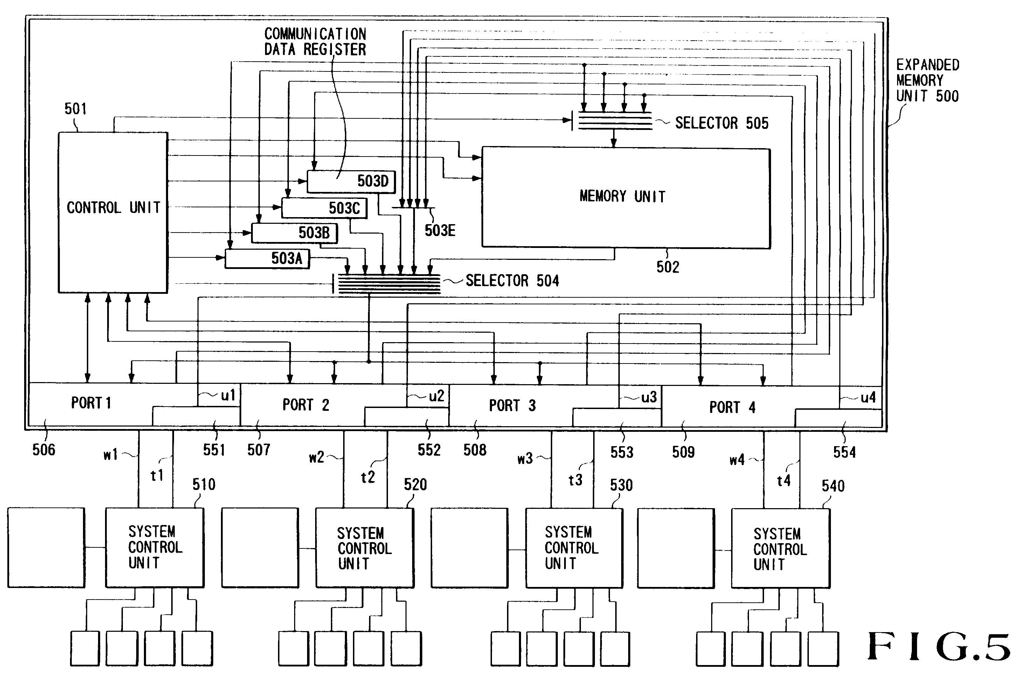

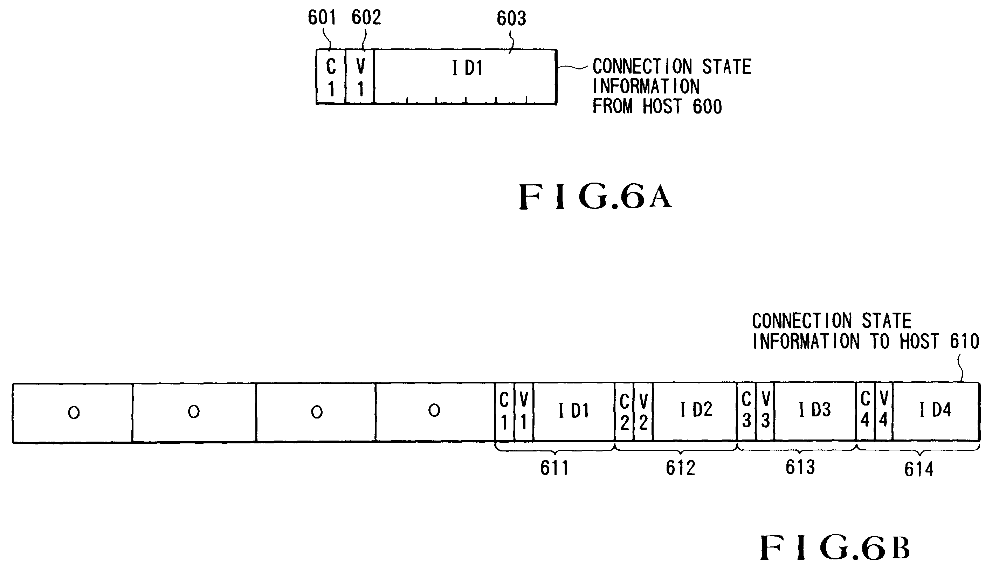

The third embodiment of the present invention will be described below with reference to Figs. 5 and 6. An expanded memory unit 500 shown in Fig. 5 has, in addition to all the constituting elements and functions of the expanded memory unit 400 shown in Fig. 4, connection state information receiving means 551 to 554 arranged in ports 506 to 509, respectively, to receive connection state information t1 to t4 including logical validity of interfaces of the respective ports and ID numbers of hosts connected to the ports via system control units 510 to 540 connected to the ports. In addition, the expanded memory unit 500 can give the connection state information received by the respective ports, to a request source via paths u1 to u4, a merging circuit 503E of the connection state information t1 to t4, and a data selector 504. Each connection state information receiving means may simply pass the received information to the selector or hold the received information using a certain holding means. In either case, the object of the present invention can be achieved. To read out the connection state information, the communication data register read request described above is used with a nonexisting communication data register number allocated for the connection state information. Since four communication data registers are present in Fig. 5, register no. "5" is used to read the connection state information.

Fig. 6A shows the contents of the connection state information t1 shown in Fig. 5, and the information t2 to t4 have the same contents as those of the information t1 although not shown. Fig. 6B shows a format of the connection state information input to the selector 504 and sent to a request source. Of the information shown in Fig. 6A, a bit C1 is information (Connect) indicating logical connection/disconnection of an interface w1. Value "1" of the bit C1 indicates that the interface is valid. A field ID1 indicates a logical ID number of a host connected to a port 1. When a bit V1 is "1", the content of the field ID1 is valid.

When one of the hosts is to start communication with another for the first time after initialization, the communication source host must confirm the presence and/or connection of the communication destination host by some means. For this purpose, the communication source host may issue inquiry communications blindly to all ports of the expanded memory unit to confirm the states of the others in accordance with the presence/absence of a response or the contents of a response. However, this method is disadvantageous in terms of complexity in procedures and a required time. In the method of this embodiment, since a request source host designates "5" as a register number to issue the communication data register read request, the connection states of all the ports and the ID numbers of hosts connected to the ports can be simultaneously confirmed. After the connection states are confirmed in this manner, host-to-host communication can be issued in exactly the same manner as in the first and second embodiments.

When a certain host wants connection with an interface within the expanded memory unit, the host sets "1" in the bit C1 to logically open the interface.

Subsequently, the host reads out the connection state information by the method as described above to check the contents of the information, confirms that a host ID of its own system is not used by another, and sets and registers its own host ID. As a result, the host is set to share the expanded memory with the other hosts.

The above connection state information can be accessed not only in path confirmation in the host-to-host communications but also in a wide range of applications such as confirmation of a sharing state of the expanded memory or system control.

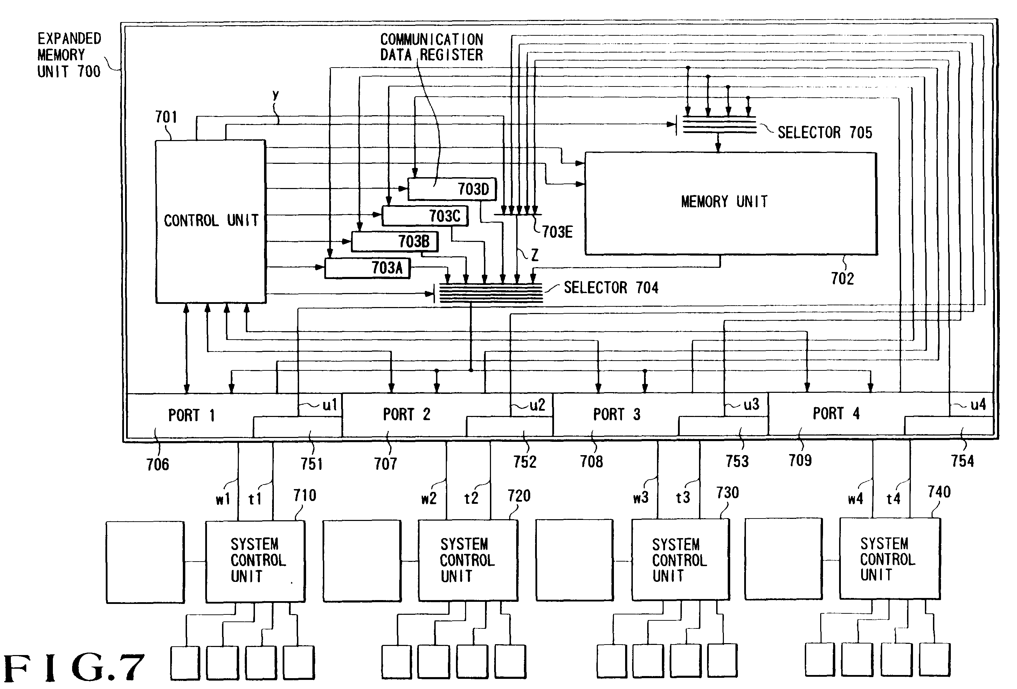

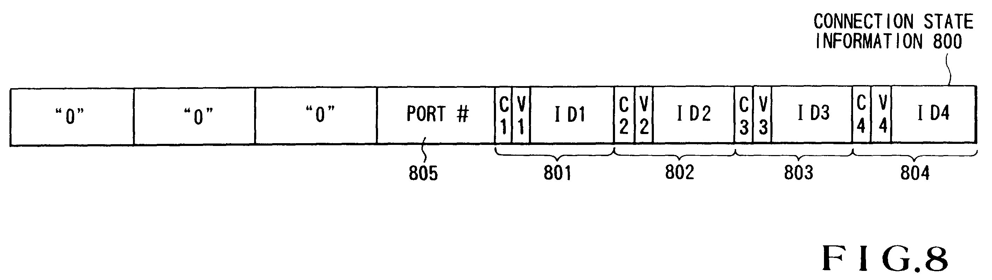

Lastly, an operation of the fourth embodiment of the present invention will be described below with reference to Figs. 7 and 8. An expanded memory unit shown in Fig. 7 has, in addition to all the functions of the expanded memory unit shown in Fig. 5, a function of sending a physical port number to which a request source is connected as a part of connection state information read out using a communication data register read request. Fig. 8 shows the contents of the sent data.

Since each host cannot internally obtain information indicating a port of the expanded memory unit to which the host is connected, this information must be externally supplied to the host. A physical connection state between hosts and the expanded memory unit is permanent and therefore can be manually given upon initialization of a system. In this case, however, a nonvolatile storage space must be prepared in a disk drive or the like, and access of information requires a procedure and a time. In this embodiment, when a certain host (e.g., a host 1) uses the communication data register read request to read out the connection state information, a control unit 701 outputs a physical port number (in this embodiment, "1") of the request source to a path y. This port number is sent together with the connection state information described above to the request source via a merging circuit 703E, a selector 704, and an interface w1.

If a purpose of the connection state information read request is to confirm the IDs of the other hosts prior to host ID registration, three IDs registered by the "other" hosts can be immediately determined from the four IDs included in the readout connection state information. In addition, a host can easily realize an operation of issuing a host-to-host communication to itself as a test.

Referring to Fig. 8, the connection state informations of all the ports and the physical port number of a request source are simultaneously sent. However, if the number of bits given as data paths is insufficient because, e.g., the expanded memory unit has a larger number of connection ports than that in this embodiment, two or more register numbers may be allocated to the connection state information in register number allocation for the communication data register read request so that only connection state information of part of ports can be read out by one access.

According to the present invention as has been described above, since a communication data register is arranged in an expanded memory unit to exchange communication data, simple and high-speed host-to-host communication can be realized via the expanded memory unit without providing any additional data lines for communication. In addition, according to the present invention, since a degree of freedom in communication data register allocation is limited to use a register corresponding to a communication source physical port number, a procedure performed when a communication destination is to read out from a communication data register can be simplified, and an amount of information except for communication data transmitted together with the communication can be minimized. Furthermore, since connection state information of each port can be read out from hosts, system state information required for host-to-host communications or the like can be easily and rapidly accessed. Moreover, since a physical port number to which a request source is connected is also obtained when connection state information is read out from a host, processing requiring the physical port number of the request source can be rapidly and easily performed.

## Claims

1. An expanded memory unit (100, 400, 500, 700) having a plurality of ports (106 - 109, 406 - 409, 506 - 509, 706 - 709) which can be connected to hosts, in which each of said hosts sends a request signal to said expanded memory unit (100, 400, 500, 700) and receives a reply signal, thereby exchanging data, comprising:
a control unit (101, 401, 501, 701) for controlling request processing received from each of said ports (106 - 109, 406 - 409, 506 - 509, 706 - 709);
a memory unit (102, 402, 502, 702);
said expanded memory unit being charaterized by:
one or a plurality of communication data registers (103, 403A - 403D, 503A - 503D, 703A - 703D) separate from said memory unit; and
a data selector (104, 404, 504, 704) for selecting data from said communication data registers (103, 403A - 403D, 503A - 503D, 703A - 703D) to send the selected data to a request source port,
wherein, if the received request signal is a host-to-host communication request, said control unit (101, 401, 501, 701) sets data supplied together with the request signal in one of said communication data registers (103, 403A - 403D, 503A - 503D, 703A - 703D) and notifies the host-to-host communication to said port designated as a communication destination, and if the received request signal is a read request for one of said communication data registers (103, 403A - 403D, 503A - 503D, 703A - 703D), said control unit (101, 401, 501, 701) outputs contents of said communication data register designated by said request source to said request source port via said data selector (104, 404, 504, 704).

2. A unit according to claim 1, wherein said communication data registers (103, 403A - 403D, 503A - 503D, 703A - 703D) are provided in at least one-to-one correspondence with said ports (106 - 109, 406 - 409, 506 - 509, 706 - 709), and said control unit (101, 401, 501, 701) sets the data supplied together with the communication request in a communication data register corresponding to said request source port.

3. A unit according to claim 1 or 2, wherein each port has connection state information receiving means (551, 552, 553, 554) for receiving one or both of a connection state signal indicating validity/invalidity of logical connection of said port and a system ID number of a host connected to said port, said data selector (104, 404, 504, 704) receives a signal from each of said connection state information receiving means (551, 552, 553, 554) in addition to the data from said communication data registers (103, 403A - 403D, 503A - 503D, 703A - 703D), and said control unit (101, 401, 501, 701) sends the connection state information to said request source port via said data selector in accordance with a connection state information read request responding to the request signal from said request source.

4. A unit according to claim 3, wherein said control unit (101, 401, 501, 701) outputs a physical port number of said port together with the connection state information to said request source port in response to the connection state information read request from said request source.

## Patentansprüche

1. Erweiterungsspeichereinheit (100, 400, 500, 700) mit mehreren Ports (106 bis 109, 406 bis 409, 506 bis 509, 706 bis 709), welche mit Hosts verbunden werden können, in welchen jeder Host ein Anforderungssignal an die Erweiterungsspeichereinheit (100, 400, 500, 700) sendet und ein Antwortsignal empfängt und dadurch Daten austauscht, mit:
einer Steuereinheit (101, 401, 501, 701) zum Steuern der Verarbeitung der von jedem Port (106 bis 109, 406 bis 409, 506 bis 509, 706 bis 709) empfangenen Anforderung;
einer Speichereinheit (102, 402, 502, 702);
wobei die Erweiterungsspeichereinheit gekennzeichnet ist durch:
ein oder mehrere von der Speichereinheit getrennte Kommunikationsdatehregister (103, 403A bis 403D, 503A bis 503D, 703A bis 703D); und
eine Datenselektionseinrichtung (104, 404, 504, 704) zum Selektieren von Daten von den Kommunikationsdatenregistern (103, 403A bis 403D, 503A bis 503D, 703A bis 703D), um die selektierten Daten an einen Anforderungsquellenport zu senden,
wobei, wenn das empfangene Anforderungssignal eine Host/Host-Kommunikationsanforderung ist, die Steuereinheit (101, 401, 501, 701) zusammen mit dem Anforderungssignal gesendete Daten in einem der Kommunikationsdatenregister (103, 403A bis 403D, 503A bis 503D, 703A bis 703D) ablegt und die Host/Host-Kommunikation an den als Kommunikationsziel bezeichneten Port meldet, und wenn das empfangene Anforderungssignal ein Leseanforderungssignal für eines der Kommunikationsdatenregister (103, 403A bis 403D, 503A bis 503D, 703A bis 703D) ist, die Steuereinheit (101, 401, 501, 701) Inhalte der von der Anforderungsquelle bezeichneten Kommunikationsdatenregister an den Anforderungsquellenport über die Datenselektionseinrichtung (104, 404, 504, 704) ausgibt.

2. Einheit nach Anspruch 1, wobei die Kommunikationsdatenregister (103, 403A bis 403D, 503A bis 503D, 703A bis 703D) zumindest in einer 1-zu-1-Entsprechung mit den Ports (106 bis 109, 406 bis 409, 506 bis 509, 706 bis 709) vorgesehen sind, und die Steuereinheit (101, 401, 501, 701) die zusammen mit der Kommunikationsdatenanforderung gesendeten Daten in einem dem Anforderungsquellenport entsprechenden Kommunikationsdatenregister ablegt.

3. Einheit nach Anspruch 1 oder 2, wobei jeder Port eine Verbindungsstatusinformation-Empfangseinrichtung (551, 552, 553, 554) für den Empfang eines oder beider Verbindungsstatussignale aufweist, die Gültigkeit/Ungültigkeit einer logischen Verbindung des Port und eine System-ID-Nummer eines mit dem Port verbundenen Hosts angeben, die Datenauswahleinrichtung (104, 404, 504, 704) ein Signal von jeder Verbindungsstatusinformation-Empfangseinrichtung (551, 552, 553, 554) zusätzlich zu den Daten von den Kommunikationsdatenregistern (103, 403A bis 403D, 503A bis 503D, 703A bis 703D) empfängt, und die Steuereinheit (101, 401, 501, 701) die Verbindungsstatusinformation an den Anforderungsquellenport über die Datenselektionseinrichtung gemäß einer Verbindungsstatusinformations-Leseanforderung in Antwort auf das Anforderungssignal von der Anforderungsquelle sendet.

4. Einheit nach Anspruch 3, wobei die Steuereinheit (101, 401, 501, 701) eine physikalische Portnummer des Ports zusammen mit der Verbindungsstatusinformation an den Anforderungsquellenport als Antwort auf die Verbindungsstatusinformations-Leseanforderung von dieser Anforderungsquelle ausgibt.

## Revendications

1. Unité de mémoire étendue (100, 400, 500, 700) ayant une pluralité de ports (106-109, 406-409, 506-509, 706-709) qui peuvent être connectés à des hôtes, dans laquelle chacun desdits hôtes envoie un signal de demande à ladite unité de mémoire étendue (100, 400, 500, 700) et reçoit un signal de réponse, pour pouvoir ainsi échanger des données, comprenant :
une unité de contrôle (101, 401, 501, 701) pour contrôler le traitement des demandes reçues en provenance de chacun desdits ports (106-109, 406-409, 506-509, 706-709) ;
une unité de mémoire (102, 402, 502, 702) ;
ladite unité de mémoire étendue étant caractérisée par :
un ou une pluralité de registres de données de communication (103, 403A-403D, 503A-503D, 703A-703D), séparé(s) de ladite unité de mémoire ; et
un sélecteur de données (104, 404, 504, 704) pour sélectionner des données contenues dans lesdits registres de données de communication (103, 403A-403D, 503A-503D, 703A-703D) de manière à transmettre les données sélectionnées à un port émetteur d'une demande,
dans laquelle, si le signal de demande reçu est une demande de communication d'hôte à hôte, ladite unité de contrôle (101, 401, 501, 701) place les données fournies avec le signal de demande dans l'un desdits registres de données de communication (103, 403A-403D, 503A-503D, 703A-703D) et notifie la communication d'hôte à hôte audit port désigné comme destination de la communication, et si le signal de demande reçu est une demande de lecture destinée à l'un desdits registres de données de communication (103, 403A-403D, 503A-503D, 703A-703D), ladite unité de contrôle (101, 401, 501, 701) transmet le contenu dudit registre de données de communication désigné par ledit émetteur de la demande audit port émetteur de la demande via le sélecteur de données (104, 404, 504, 704).

2. Unité selon la revendication 1, dans laquelle lesdits registres de données de communication (103, 403A-403D, 503A-503D, 703A-703D) sont fournis dans au moins une correspondance bijective avec lesdits ports (106-109, 406-409, 506-509, 706-709), et ladite unité de contrôle (101, 401, 501, 701) place les données fournies avec la demande de communication dans un registre de données de communication correspondant audit port émetteur de la demande.

3. Unité selon la revendication 1 ou 2, dans laquelle chaque port a des moyens de réception d'informations d'état de connexion (551, 552, 553, 554) pour recevoir un ou les deux signaux d'état de connexion indiquant la validité/l'invalidité de la connexion logique dudit port et un numéro d'identification de système d'un hôte connecté audit port, ledit sélecteur de données (104, 404, 504, 704) reçoit un signal de chacun desdits moyens de réception d'informations d'état de connexion (551, 552, 553, 554) en plus des données provenant desdits registres de données de communication (103, 403A-403D, 503A-503D, 703A-703D), et ladite unité de contrôle (101, 401, 501, 701) transmet les informations d'état de connexion audit port émetteur de la demande, par l'intermédiaire dudit sélecteur de données, selon une demande de lecture d'informations d'état de la connexion répondant à un signal de demande provenant dudit émetteur de la demande.

4. Unité selon la revendication 3, dans laquelle ladite unité de contrôle (101, 401, 501, 701) émet en sortie un numéro de port physique dudit port avec les informations d'état de connexion audit port émetteur de la demande en réponse à la demande de lecture des informations d'état de connexion provenant dudit émetteur de la demande.
